# FASCICULE DE BREVET EUROPEEN

(11) **EP 1 797 763 B1**
(45) Date de publication et mention de la délivrance du brevet: **15.04.2009**
(21) Numéro de dépôt: 06356142.7
(22) Date de dépôt: 07.12.2006
(51) Int. Cl.: A22C 7/00

(54) **Dispositif de moulage de préparations hachées**
Vorrichtung zum Formen von gehackten Präparaten
Device for moulding chopped preparations

(30) Priorité: 13.12.2005 FR 0512591
(43) Date de publication de la demande: 20.06.2007
(73) Titulaire: SEB S.A., 69130 Ecully (FR)
(72) Inventeur: Astegno, Jean Paul, 64420 Espoey (FR); Charles, Patrick, 65290 Louey (FR)
(74) Mandataire: Kiehl, Hubert

(56) Documents cités:
- DE-B- 1 181 091
- DE-B- 1 275 906
- FR-A- 2 563 413
- FR-A- 2 564 290
- FR-A- 2 571 596

## Description

La présente invention concerne le domaine technique des appareils électroménagers de préparation culinaire, et concerne plus particulièrement un dispositif de moulage de préparations hachées.

Des moules destinés à être remplis manuellement sont parfois fournis avec les hachoirs domestiques, pour réaliser par exemple des beefsteaks reconstitués à partir de viande hachée. Toutefois le remplissage de ces moules est fastidieux. De plus l'utilisateur doit successivement manipuler l'appareil pour hacher la viande puis un couvercle pour compacter la viande recueillie dans le moule.

Il est connu du document FR 1 299 087 un dispositif agencé au débouché d'un appareil de type hachoir à vis, prévu pour fabriquer des beefsteaks reconstitués à partir de viande hachée. La préparation hachée est collectée dans un réceptacle monté coulissant dans un bâti du dispositif. Un poussoir agencé dans le réceptacle permet d'actionner un interrupteur agencé dans le bâti pour arrêter le moteur de l'appareil lorsque le réceptacle est rempli. Les documents FR 2 564 290, FR 2 571 596, FR 2 589 686, et EP 0 321 766 divulguent d'autres moyens d'arrêt automatique prévus pour éviter un remplissage excessif d'un réceptacle de collecte de la préparation hachée. Toutefois les moyens d'arrêt automatique décrits par ces différents documents sont à la fois compliqués et onéreux à réaliser, du fait notamment de l'utilisation de capteurs pour détecter un remplissage excessif du réceptacle de collecte de la préparation hachée afin d'arrêter le hachoir. De ce fait, les dispositifs de moulage de préparations hachées proposés dans ces documents sont plutôt destinés à une utilisation professionnelle.

Un dispositif de moulage de préparations hachées selon le préambule de la revendication 1 est connu du document DE 1 275 906 ou du document FR 1 299 087.

Un but de la présente invention est de proposer un dispositif de moulage de préparations hachées présentant une construction économique.

Un autre but de la présente invention est de proposer un dispositif de moulage de préparations hachées dont l'utilisation soit durable.

Un autre but de la présente invention est de proposer un dispositif de moulage de préparations hachées dont l'utilisation soit peu contraignante.

Ces buts sont atteints avec un dispositif de moulage de préparations hachées, comportant un support prévu pour être monté sur une sortie d'évacuation d'aliments hachés et un élément de boîtier prévu pour être relié audit support, ledit support et ledit élément de boîtier définissant un conduit débouchant dans un logement prévu pour recevoir un accessoire de moulage de préparations hachées, le conduit et l'accessoire de moulage de préparations hachées définissant un espace de réception d'aliments hachés, du fait que le support comporte un organe de retenue et que l'élément de boîtier comporte un organe d'accrochage prévu pour venir en prise avec l'organe de retenue, la pression exercée par les aliments hachés dans l'espace de réception d'aliments hachés étant susceptible de libérer l'organe d'accrochage de la prise avec l'organe de retenue, autorisant un déplacement de l'élément de boîtier par rapport au support libérant un espace d'expansion pour les aliments hachés. Ainsi l'effort exercé par les aliments hachés peut être limité pour éviter une destruction de l'accessoire en cas de remplissage trop poussé de l'accessoire de moulage de préparations hachées. Ces dispositions permettent de réaliser le dispositif de moulage de préparations hachées de manière plus économique. L'utilisateur peut gérer le remplissage de l'accessoire de moulage de préparations hachées de manière beaucoup moins contraignante que lors d'un remplissage manuel.

Avantageusement, l'élément de boîtier reste relié au support après que l'organe d'accrochage a cessé d'être en prise avec l'organe de retenue. Cette disposition permet d'éviter une chute de l'élément de boîtier logeant l'accessoire de moulage de préparations hachées et son contenu, ou une chute de l'accessoire de moulage de préparations hachées et de son contenu. Cette disposition permet d'avertir l'utilisateur que l'accessoire de moulage de préparations hachées est rempli. Avantageusement, cette disposition permet de limiter les variations de volume du logement et de limiter les fuites d'aliments hachés entre le support et l'élément de boîtier. Selon un mode de réalisation, un autre organe de retenue issu du support vient en prise avec l'organe d'accrochage ou avec un autre organe d'accrochage de l'élément de boîtier après que l'organe de retenue a cessé d'être en prise avec l'organe d'accrochage. Selon un autre mode de réalisation, l'organe de retenue ou un autre organe de retenue issu du support vient en prise avec un autre organe d'accrochage issu de l'élément de boîtier après que l'organe de retenue a cessé d'être en prise avec l'organe d'accrochage.

Selon une forme de réalisation, la pression exercée par les aliments hachés dans l'espace de réception d'aliments hachés est susceptible de déplacer l'organe d'accrochage par rapport à l'organe de retenue. L'organe d'accrochage et l'organe de retenue présentent chacun une surface de contact prolongée par une surface d'échappement. Au moins l'une des surfaces de contact est une surface chanfreinée par rapport à la direction de l'effort résultant de la pression exercée par les aliments hachés. Le glissement entre cette surface chanfreinée et l'autre surface de contact permet de libérer l'organe d'accrochage de la prise de l'organe de retenue, autorisant ainsi un déplacement de l'élément de boîtier par rapport au support. L'élément de boîtier peut resté relié au support, ou non.

Selon une autre forme de réalisation, la pression exercée par les aliments hachés est susceptible de déplacer un organe de commande coopérant avec l'organe d'accrochage pour libérer l'organe de retenue. Selon une autre forme de réalisation, la pression exercée par les aliments hachés est susceptible de déplacer un organe de commande coopérant avec l'organe de retenue pour libérer l'organe d'accrochage. Ces dispositions permettent de mieux calibrer l'effort de libération de l'élément de boîtier.

Avantageusement alors, l'organe de commande appartient à l'accessoire de moulage de préparations hachées. Cette disposition permet de limiter le nombre de pièces du dispositif de moulage de préparations hachées.

Avantageusement, l'accessoire de moulage de préparations hachées présente une paroi périphérique au moins partiellement déformable élastiquement par flexion. L'accessoire de moulage de préparations hachées peut ainsi être réalisé en une seule pièce. En alternative, l'accessoire de moulage de préparations hachées pourrait notamment être réalisé en deux parties associées à une charnière élastique articulée.

Avantageusement alors, la paroi périphérique est fendue transversalement. Les deux extrémités de la paroi périphérique fendue transversalement peuvent ainsi être écartées ou rapprochées. L'accessoire de moulage de préparations hachées peut ainsi être réalisé dans un matériau relativement rigide tel qu'un thermoplastique.

Avantageusement alors, l'organe de commande est agencé près d'une extrémité de la paroi périphérique fendue transversalement. Cette disposition permet de bénéficier d'un effet de levier et aussi d'offrir une plus grande augmentation de volume pour les aliments hachés. La déformation du logement peut être mieux contrôlée.

Selon une disposition avantageuse, l'accessoire de moulage de préparations hachées est dépourvu de paroi de fond. En d'autres termes, l'autre ouverture latérale s'étend jusqu'à la paroi périphérique. Cette disposition permet de mettre l'accessoire de moulage de préparations hachées indifféremment dans un sens ou dans l'autre. Cette disposition contribue également à faciliter le démoulage des aliments hachés recueillis dans l'accessoire de moulage de préparations hachées, les aliments n'étant plus susceptibles d'adhérer à une paroi de fond lors de l'écartement de la paroi périphérique.

Selon une autre disposition avantageuse, l'accessoire de moulage de préparations hachées est pourvu d'un organe de sectionnement, l'ouverture de remplissage étant agencée entre l'organe de sectionnement et une ouverture de sortie du conduit lorsque l'accessoire de moulage de préparations hachées est agencé dans le logement. L'organe de sectionnement peut être formé par une ou plusieurs parois de fond dégageant l'ouverture de remplissage. La ou les parois de fond ne sont pas nécessairement reliées à deux parties opposées de la paroi latérale. La ou les parois de fond peuvent ménager d'autres ouvertures que l'ouverture de remplissage. L'ouverture d'introduction du logement étant disposée latéralement par rapport à l'ouverture de remplissage de l'accessoire de moulage de préparations hachées, l'organe de sectionnement traverse le flux d'aliments hachés issu de l'ouverture de remplissage lors du retrait de l'accessoire de moulage de préparations hachées du logement. Une telle réalisation peut constituer une invention en tant que telle pour un dispositif de moulage de préparations hachées, comportant un conduit débouchant dans un logement prévu pour recevoir un accessoire de moulage de préparations hachées, dans lequel le conduit et l'accessoire de moulage de préparations hachées définissent un espace de réception d'aliments hachés, le logement présentant une ouverture d'introduction de l'accessoire de moulage de préparations hachées, l'accessoire de moulage de préparations hachées présentant une ouverture de remplissage agencée en regard du conduit lorsque ledit accessoire de moulage de préparations hachées est disposé dans le logement.

Avantageusement encore, l'accessoire de moulage de préparations hachées est muni de moyens de préhension, pour faciliter le retrait de l'accessoire de moulage de préparations hachées du logement.

Avantageusement encore, l'accessoire de moulage de préparations hachées comporte deux moyens de préhension agencés aux extrémités de la paroi périphérique fendue transversalement. Cette disposition permet de faciliter le démoulage de la préparation moulée.

Avantageusement encore, le logement est défini par le support et l'élément de boîtier. Cette disposition permet un accès plus aisé aux parois internes du logement et facilite le nettoyage.

Avantageusement encore, l'élément de boîtier est monté amovible sur le support. Cette disposition permet de déplacer plus aisément la préparation moulée.

Avantageusement encore, l'accessoire de moulage de préparations hachées est monté amovible dans le logement. Cette disposition permet un accès plus aisé aux parois internes du logement et de l'accessoire de moulage de préparations hachées et facilite leur nettoyage.

Avantageusement encore, l'élément de boîtier présente une fenêtre transparente ou translucide. Cette disposition permet de visualiser le remplissage de l'accessoire de moulage de préparations hachées inséré dans le logement.

L'invention sera mieux comprise à l'étude de trois exemples de réalisation et de variantes, pris à titre nullement limitatif, illustrés dans les figures annexées, dans lesquelles :
- la figure 1 est une vue en perspective d'un premier exemple de réalisation d'un bloc de coupe de hachoir à vis associé à un dispositif de moulage de préparations hachées selon l'invention,
- la figure 2 est une vue en coupe du bloc de coupe de hachoir à vis et du dispositif de moulage de préparations hachées selon l'invention montrés à la figure 1,
- la figure 3 est une vue en éclaté du bloc de coupe de hachoir à vis et du dispositif de moulage de préparations hachées selon l'invention montrés aux figures 1 et 2,
- la figure 4 est une vue en éclaté de deux parties du dispositif de moulage de préparations hachées selon l'invention montré aux figures 1 à 3,
- la figure 5 est une vue d'un détail d'une variante de réalisation du dispositif de moulage de préparations hachées selon l'invention montré aux figures 1 à 4,
- la figure 6 est une vue en perspective d'un deuxième exemple de réalisation d'un bloc de coupe de hachoir à vis associé à un dispositif de moulage de préparations hachées selon l'invention,
- la figure 7 est une vue en coupe du bloc de coupe de hachoir à vis et du dispositif de moulage de préparations hachées selon l'invention montrés à la figure 6,
- la figure 8 est une vue en éclaté du bloc de coupe de hachoir à vis et du dispositif de moulage de préparations hachées selon l'invention montrés aux figures 6 et 7,
- les figures 9 et 10 illustrent un support du dispositif de moulage de préparations hachées selon l'invention montré aux figures 6 à 8,
- la figure 11 illustre un élément de boîtier du dispositif de moulage de préparations hachées selon l'invention montré aux figures 6 à 8,
- les figures 12 et 13 illustrent un accessoire de moulage de préparations hachées du dispositif de moulage de préparations hachées selon l'invention montré aux figures 6 à 8,
- la figure 14 illustre le montage de l'accessoire de moulage de préparations hachées et de l'élément de boîtier du dispositif de moulage de préparations hachées selon l'invention montré aux figures 6 à 8,
- la figure 15 est une vue en perspective d'un troisième exemple de réalisation d'un bloc de coupe de hachoir à vis associé à un dispositif de moulage de préparations hachées selon l'invention,
- la figure 16 est une vue en éclaté du bloc de coupe de hachoir à vis et du dispositif de moulage de préparations hachées selon l'invention montrés à la figure 15,
- la figure 17 est une vue en coupe du bloc de coupe de hachoir à vis et du dispositif de moulage de préparations hachées selon l'invention montrés aux figures 15 et 16,
- la figure 18 illustre un support du dispositif de moulage de préparations hachées selon l'invention montré aux figures 15 à 17,
- la figure 19 est une vue en éclaté du support montré à la figure 18,
- les figures 20 et 21 illustrent un accessoire de moulage de préparations hachées du dispositif de moulage de préparations hachées selon l'invention montré aux figures 15 à 17,
- la figure 22 illustre le dispositif de moulage de préparations hachées selon l'invention montré aux figures 15 à 17, dans une position fermée de remplissage,
- la figure 23 illustre le dispositif de moulage de préparations hachées selon l'invention montré aux figures 15 à 17, dans une position semi-ouverte d'avertissement,
- la figure 24 illustre le dispositif de moulage de préparations hachées selon l'invention montré aux figures 15 à 17, dans une position ouverte permettant le retrait de l'accessoire de moulage de préparations hachées.

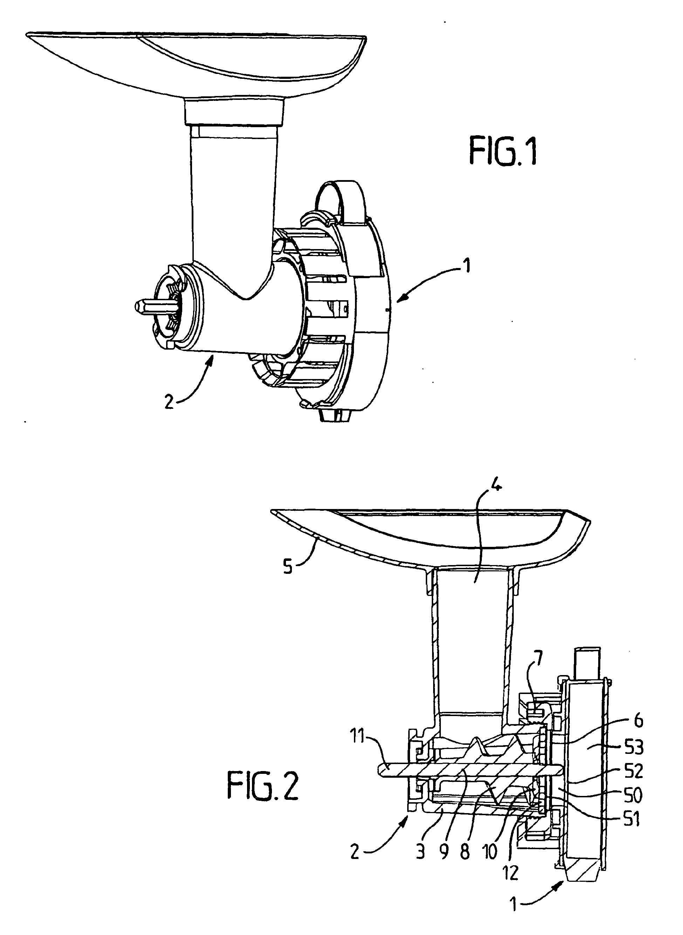

Les figures 1 à 4 montrent un premier exemple de réalisation d'un dispositif de moulage de préparations hachées 1 selon l'invention, ce dispositif de moulage de préparations hachées 1 étant associé à un bloc de coupe 2 de hachoir à vis.

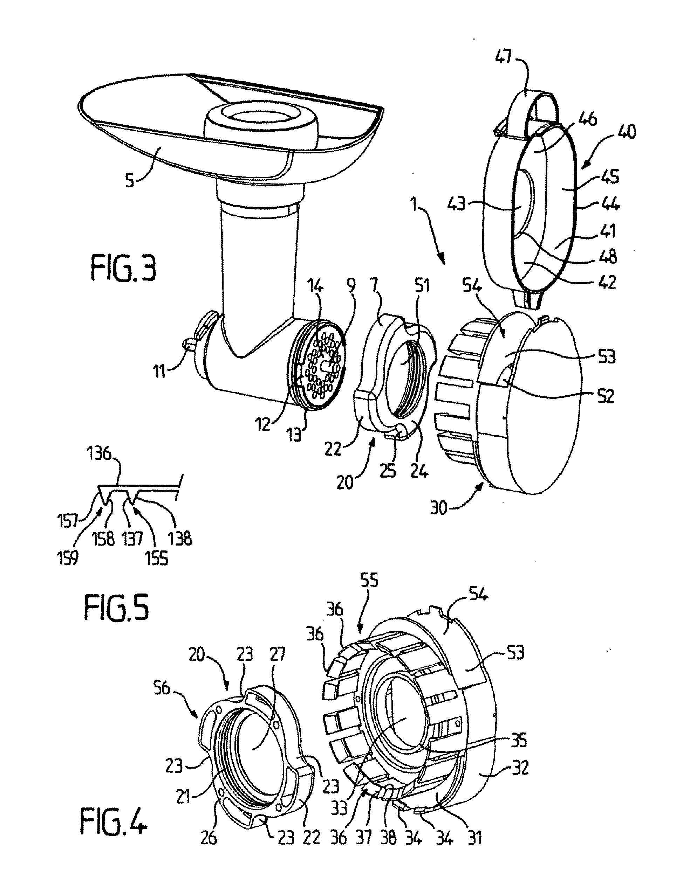

Tel que montré à la figure 2, le bloc de coupe 2 comporte un corps creux 3 présentant une ouverture supérieure 4 sur laquelle est monté un plateau 5 servant à l'introduction des aliments, et une ouverture latérale 6 fermée par un écrou 7. Une vis 8 présentant un axe 9 est agencée dans le corps creux 3. Un couteau 10 est monté sur l'axe 9 à une extrémité de la vis 8. Un organe d'entraînement 11 est prévu à l'autre extrémité de la vis 8. Une grille 12 est agencée entre le couteau 10 et l'écrou 7. Tel que montré à la figure 3, le corps creux 3 présente un pas de vis externe 13 prévu pour recevoir l'écrou 7.

Le dispositif de moulage de préparations hachées 1 illustré sur la figure 3 comporte un support 20, un élément de boîtier 30 et un accessoire de moulage de préparations hachées 40. Le support 20 est prévu pour être monté sur une sortie d'évacuation 14 d'aliments hachés. La grille 12 est montée dans la sortie d'évacuation 14 d'aliments hachés. Le support 20 est formé par l'écrou 7. L'élément de boîtier 30 est prévu pour être relié au support 20.

Tel que visible sur les figures 2 à 4, le support 20 et l'élément de boîtier 30 définissent un conduit 50 débouchant dans un logement 53 prévu pour recevoir l'accessoire de moulage de préparations hachées 40. Le conduit 50 présente une ouverture d'entrée 51 prévue pour être agencée en regard de la sortie d'évacuation 14 et une ouverture de sortie 52 débouchant dans le logement 53. Le logement 53 présente une ouverture de sortie au moins partielle de l'accessoire de moulage de préparations hachées 40. Le conduit 50 et l'accessoire de moulage de préparations hachées 40 définissent un espace de réception d'aliments hachés. Plus particulièrement, l'accessoire de moulage de préparations hachées 40 est monté amovible dans le logement 53. Le logement 53 présente une ouverture d'introduction 54 prévue pour la mise en place de l'accessoire de moulage de préparations hachées 40. D'après l'orientation usuelle du bloc de coupe 2, l'ouverture d'entrée 51 est latérale et l'ouverture d'introduction 54 est supérieure.

Le support 20 formé par l'écrou 7 présente un pas de vis interne 21 prévu pour coopérer avec le pas de vis externe 13 du corps creux 3. Le support 20 présente une face périphérique 22 munie d'encoches 23 permettant de faciliter le dévissage. Le support 20 présente une face avant 24 raccordée à la face périphérique 22 par des arrondis 25 et une face arrière 26 raccordée à la face périphérique 22 par des arrondis moins marqués. Le support 20 présente un passage central 27 formant une partie du conduit 50.

L'élément de boîtier 30 comporte une partie amont 31 assemblée avec une partie aval 32. La partie amont 31 et la partie aval 32 définissent le logement 53 et l'ouverture d'introduction 54. L'élément de boîtier 30 est monté amovible sur le support 20. La partie amont 31 présente un passage 33 appartenant au conduit 50. La partie amont 31 et la partie aval 32 sont assemblées par clipsage. A cet effet, la partie aval 32 présente deux crochets inférieurs 34. L'élément de boîtier 30 comprend une fenêtre transparente ou translucide avantageusement formée par la partie aval 32.

L'élément de boîtier 30 est monté amovible sur le support 20. L'élément de boîtier 30 comporte un organe d'accrochage 55 prévu pour venir en prise avec un organe de retenue 56 du support 20. L'organe d'accrochage 55 est formé par une série de crochets 36 agencés autour du passage 33. Un anneau 35 entoure le passage 33. Les crochets 36 présentent une face extérieure 37 et une face intérieure 38 chanfreinées. L'organe de retenue 56 est formé par le raccord entre la face périphérique 22 et la face arrière 26. La pression exercée par les aliments hachés dans l'espace de réception d'aliments hachés est susceptible de libérer l'organe d'accrochage 55 de la prise avec l'organe de retenue 56.

L'accessoire de moulage de préparations hachées 40 présente une paroi périphérique 41, une face latérale 42 comportant une ouverture de remplissage 43, et une autre face latérale 44 définissant une ouverture de démoulage 45 s'étendant jusqu'à la paroi périphérique 41. La paroi périphérique 41 définit partiellement l'espace de réception d'aliments hachés. La face latérale 42 forme une paroi de fond 46 présentant l'ouverture de remplissage 43. L'accessoire de moulage de préparations hachées 40 est pourvu d'un organe de sectionnement 48 formé par le bord de l'ouverture de remplissage 43 opposé à l'ouverture d'introduction 54. L'ouverture de remplissage 43 est prévue pour être disposée en regard de l'ouverture de sortie 52 d'aliments hachés du conduit 50. L'ouverture de sortie 52 du conduit 50 est agencée entre l'organe de sectionnement 48 et l'ouverture d'introduction 54 lorsque l'accessoire de moulage de préparations hachées 40 est agencé dans le logement 53. L'organe de sectionnement 48 peut être formé par une ou plusieurs parois de fond dégageant l'ouverture de remplissage. L'accessoire de moulage de préparations hachées 40 est muni de moyens de préhension 47.

Dans ce premier exemple de réalisation, l'élément de boîtier 30 forme une partie mobile par rapport au support 20. L'élément de boîtier 30 est détachable du support 20. Plus particulièrement, l'élément de boîtier 30 forme une partie mobile par rapport à l'écrou 7.

Le fonctionnement de ce premier exemple de réalisation est le suivant.

L'utilisateur monte sur un bloc moteur de hachoir le bloc de coupe 2 avec l'écrou 7, puis met en place l'élément de boîtier 30 sur l'écrou 7 formant le support 20. Les arrondis 25 facilitent la mise en place en repoussant les faces extérieures 37 chanfreinées des crochets 36. L'utilisateur peut ensuite mettre en place l'accessoire de moulage de préparations hachées 40 dans le logement 53.

L'utilisateur introduit ensuite les aliments dans le bloc de coupe 2 par l'ouverture 4. Les aliments poussés par la vis 8 sont hachés par le couteau 10, sortent par la grille 12, entrent dans le conduit 50, passent l'ouverture de remplissage 43 et atteignent l'accessoire de moulage de préparations hachées 40 disposé dans le logement 53. L'utilisateur peut contrôler par la fenêtre transparente ou translucide le remplissage de l'accessoire de moulage de préparations hachées 40 et arrêter le moteur du hachoir.

Toutefois si l'utilisateur n'est pas suffisamment attentif, les aliments hachés recueillis dans l'espace de réception d'aliments hachés exercent une pression sur l'élément de boîtier 30 monté sur le support 20. Les faces intérieures 38 chanfreinées des crochets 35 permettent l'avancée de l'élément de boîtier 30 par rapport au support 20 puis le détachement de l'élément de boîtier 30 du support 20. Ainsi la pression exercée par les aliments hachés dans l'espace de réception d'aliments hachés est susceptible de libérer l'organe d'accrochage 55 de la prise avec l'organe de retenue 56, autorisant un déplacement de l'élément de boîtier 30 par rapport au support 20 libérant un espace d'expansion pour les aliments hachés. Ainsi la destruction du dispositif de moulage de préparations hachées sous l'action de la pression des aliments hachés peut être évitée.

A titre de variante, un autre organe d'accrochage peut venir en prise avec l'organe de retenue 56 ou avec un autre organe de retenue, après que l'organe d'accrochage 55 a été libéré de la prise avec l'organe de retenue 56, afin de retenir l'élément de boîtier 30 sur le support 20.

Par exemple, au moins deux des crochets 36 peuvent être remplacés par des crochets 136 illustrés à la figure 5 présentant une face intérieure 138 et une face extérieure 137 chanfreinées appartenant à l'organe d'accrochage 155, prolongées par une autre face intérieure 158 et une autre face extérieure 157 chanfreinées appartenant à un organe d'accrochage additionnel 159.

La pression exercée par les aliments hachés dans l'espace de réception d'aliments hachés est susceptible de libérer l'organe d'accrochage 155 de la prise avec l'organe de retenue 56, autorisant un déplacement de l'élément de boîtier 30 par rapport au support 20 libérant un espace d'expansion pour les aliments hachés.

Le fonctionnement de cette variante de réalisation diffère du fonctionnement de l'exemple de réalisation précédent en ce que l'élément de boîtier 30 reste relié au support 20 par l'intermédiaire de l'autre organe d'accrochage 159 venant en prise avec l'organe de retenue 56 après que l'organe d'accrochage 155 a cessé d'être en prise avec l'organe de retenue 56.

A titre de variante complémentaire, un autre organe de retenue issu du support peut venir en prise avec l'autre organe d'accrochage 159 issu de l'élément de boîtier 30 après que l'organe de retenue 56 a cessé d'être en prise avec l'organe d'accrochage 155.

A titre de variante, l'organe de sectionnement 48 peut être formé par une ou plusieurs parois de fond dégageant l'ouverture de remplissage 43. La ou les parois de fond ne sont pas nécessairement reliées à deux parties opposées de la paroi latérale 41. La ou les parois de fond peuvent ménager d'autres ouvertures que l'ouverture de remplissage.

A titre de variante, l'accessoire de moulage de préparation hachées 40 n'est pas nécessairement monté amovible dans le logement 53. L'accessoire de moulage de préparations hachées 40 peut sortir seulement au moins partiellement de l'ouverture d'introduction 54. L'accessoire de moulage de préparations hachées 40 pourrait par exemple être monté pivotant dans le logement 53.

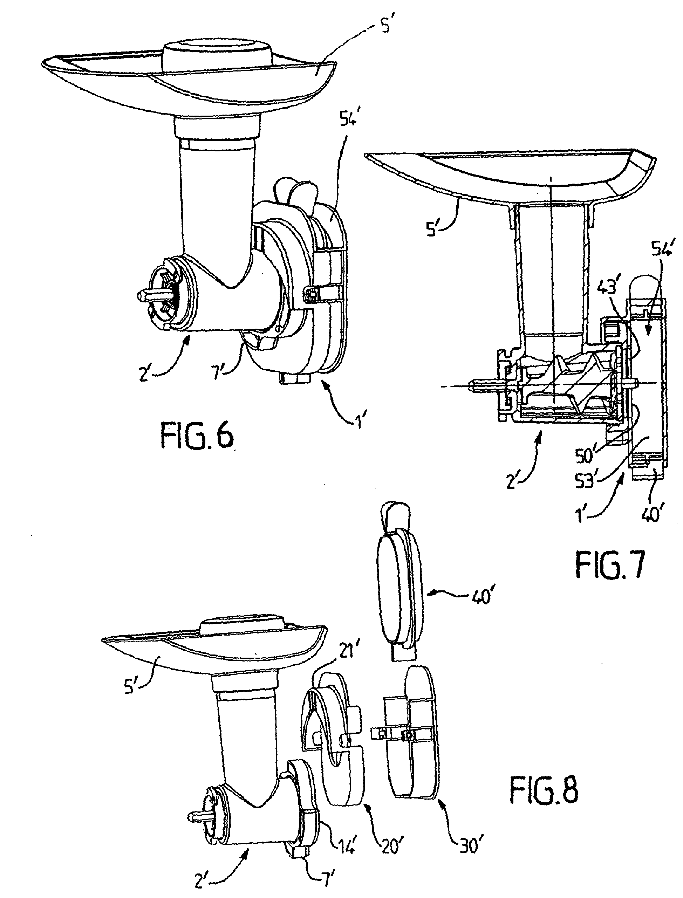

Un deuxième exemple de réalisation d'un dispositif de moulage de préparations hachées 1' selon l'invention est illustré aux figures 6 à 14. Le dispositif de moulage de préparations hachées 1' est monté sur un écrou 7' d'un bloc de coupe 2'. Le bloc de coupe 2' est identique au bloc de coupe 2 de l'exemple de réalisation précédent.

Tel que visible sur les figures 7 et 8, le dispositif de moulage de préparations hachées 1' comporte un support 20', un élément de boîtier 30' et un accessoire de moulage de préparations hachées 40'. Le support 20' est prévu pour être monté sur une sortie d'évacuation 14' d'aliments hachés. Plus particulièrement, le support 20' est prévu pour être monté sur l'écrou 7'. L'élément de boîtier 30' est prévu pour être relié au support 20'.

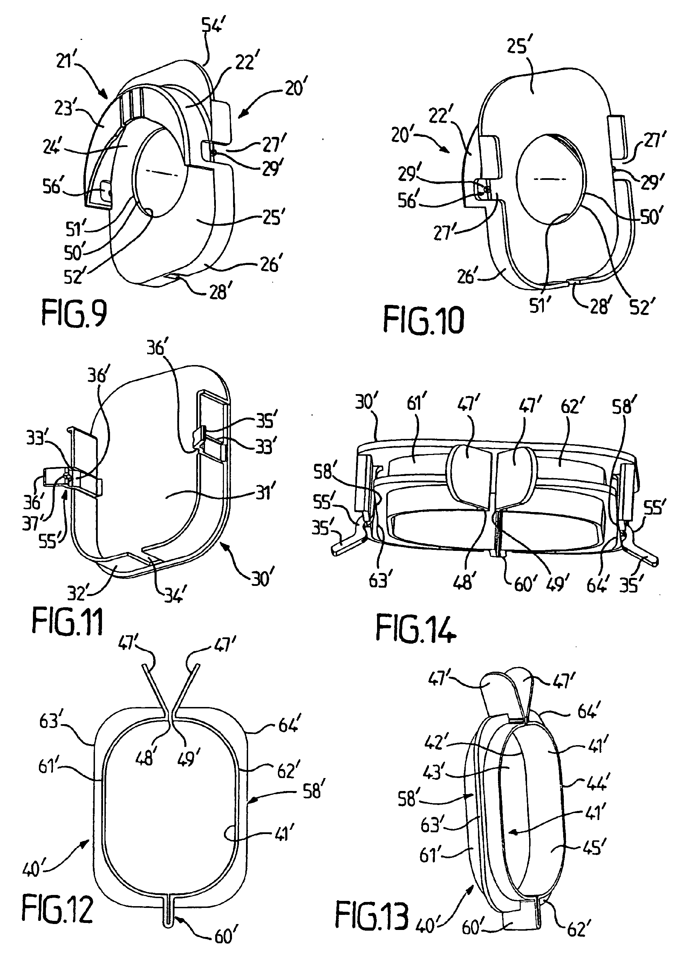

Le support 20' et l'élément de boîtier 30' définissent un conduit 50' débouchant dans un logement 53' prévu pour recevoir l'accessoire de moulage de préparations hachées 40'. Le conduit 50' présente une ouverture d'entrée 51', prévue pour être agencée en regard de la sortie d'évacuation 14', et une ouverture de sortie 52', débouchant dans le logement 53'. L'ouverture d'entrée 51' et ouverture de sortie 52' sont visibles sur la figure 9. L'ouverture d'entrée 51' est ménagée sur le support 20'. Le logement 53' est défini par le support 20' et l'élément de boîtier 30'. L'accessoire de moulage de préparations hachées 40' est monté amovible dans le logement 53', visible sur la figure 7. Le logement 53' présente une ouverture d'introduction 54', visible sur la figure 6, prévue pour la mise en place de l'accessoire de moulage de préparations hachées 40' après retrait du plateau 5' servant à l'introduction des aliments. Le conduit 50' et l'accessoire de moulage de préparations hachées 40' définissent un espace de réception d'aliments hachés. D'après l'orientation usuelle du bloc de coupe 2', l'ouverture d'entrée 51' est latérale et l'ouverture d'introduction 54' est supérieure.

Le support 20' illustré aux figures 9 et 10 comporte un organe de montage 21' comprenant une paroi d'appui supérieure 22' et deux parois de retenues latérales 23', 24'. L'organe de montage 21' est prévu pour coiffer l'écrou 7'. L'une des parois de retenue latérales 24' appartient à une paroi principale 25' définissant partiellement le logement 53'. La paroi principale 25' présenté l'ouverture d'entrée 51' ainsi que l'ouverture de sortie 52'. La paroi principale 25' est partiellement prolongée par une paroi latérale 26' dégageant l'ouverture d'introduction 54' et présentant deux échancrures latérales 27' ainsi qu'une échancrure inférieure 28'. Les échancrures latérales 27' se prolongent dans les extrémités latérales de la paroi d'appui supérieure 22'. La paroi principale 25' porte un ergot latéral 29' dans chacune des échancrures latérales 27'.

L'élément de boîtier 30' illustré à la figure 11 est monté amovible sur le support 20'. L'élément de boîtier 30' comporte une paroi frontale 31' définissant partiellement le logement 53'. La paroi frontale 31' est partiellement prolongée par une paroi latérale intérieure 32' présentant deux échancrures latérales 33' et une échancrure inférieure 34'. La paroi latérale intérieure 32' est agencée en retrait par rapport au bord de la paroi latérale 26' et vient se placer à l'intérieur de celle-ci. La paroi frontale 31' porte une languette élastique 35' dans chacune des échancrures latérales 33'. Chaque languette élastique 35' présente un siège 36' prévu pour coopérer avec le support 20' et un guidage 37' prévu pour coopérer avec l'un des ergots latéraux 29'.

L'élément de boîtier 30' comprend une fenêtre transparente ou translucide avantageusement formée par la paroi frontale 31'. L'élément de boîtier 30' peut être réalisé entièrement en matériau transparent ou translucide. A titre de variante, la paroi frontale 31' peut notamment comporter une fenêtre transparente ou translucide.

L'élément de boîtier 30' comporte un organe d'accrochage 55' prévu pour venir en prise avec un organe de retenue 56' du support 20'. L'organe d'accrochage 55' est formé par les guidages 37' des languettes élastiques 35'. L'organe de retenue 56' est formé par les ergots latéraux 29'.

L'accessoire de moulage de préparations hachées 40' illustré aux figures 12 et 13 présente une paroi périphérique 41', une face latérale 42' comportant une ouverture de remplissage 43' s'étendant jusqu'à la paroi périphérique 41', et une autre face latérale 44' définissant une ouverture de démoulage 45' s'étendant jusqu'à la paroi périphérique 41'. L'ouverture de remplissage 43' s'étendant jusqu'à la paroi périphérique 41' est prévue pour être disposée en regard de l'ouverture de sortie 52' d'aliments hachés du conduit 50'.

La paroi périphérique 41' définit partiellement l'espace de réception d'aliments hachés. L'accessoire de moulage de préparations hachées 40' est dépourvu de paroi de fond. La paroi périphérique 41' est fendue transversalement, et présente deux bords d'extrémité 48', 49' susceptibles d'être rapprochés et/ou écartés l'un de l'autre. La paroi périphérique 41' forme une charnière élastique 60' prolongée par deux parties recourbées 61', 62' présentant chacune une nervure extérieure longitudinale 63', 64'. L'accessoire de moulage de préparations hachées 40' est muni de moyens de préhension 47'. Deux moyens de préhension 47' sont agencés aux extrémités de la paroi périphérique 41' fendue transversalement. Les nervures extérieures longitudinales 63', 64' s'étendent jusqu'aux moyens de préhension 47'. Les nervures extérieures longitudinales 63', 64' s'interrompent au niveau de la charnière élastique 60'. Ainsi la paroi périphérique 41' est au moins partiellement déformable élastiquement par flexion, au niveau de la charnière élastique 60'. Les nervures extérieures longitudinales 63', 64' permettent de rigidifier les parties recourbées 61', 62'.

L'accessoire de moulage de préparations hachées 40' présente un plan de symétrie passant par les nervures extérieures longitudinales 63', 64'. Ainsi l'ouverture de remplissage 43' pourrait servir d'ouverture de démoulage, et l'ouverture de démoulage 45' pourrait servir d'ouverture de remplissage.

L'accessoire de moulage de préparations hachées 40' comporte un organe de commande 58' prévu pour coopérer avec l'organe d'accrochage 55'. Lorsque l'accessoire de moulage de préparations hachées 40' est en place dans l'élément de boîtier 30', tel que représenté à la figure 14, les nervures extérieures longitudinales 63', 64' viennent en contact avec les languettes élastiques 35'. La pression exercée par les aliments hachés dans l'espace de réception d'aliments hachés est susceptible de libérer l'organe d'accrochage 55' de la prise avec l'organe de retenue 56', autorisant un déplacement de l'élément de boîtier 30' par rapport au support 20' libérant un espace d'expansion pour les aliments hachés. Plus particulièrement, la pression exercée par les aliments hachés est susceptible de déplacer l'organe de commande 58', formé par les nervures extérieures longitudinales 63', 64'. L'organe de commande 58' coopère alors avec l'organe d'accrochage 55', formé par les guidages 37' des languettes élastiques 35', pour libérer l'organe de retenue 56', formé par les ergots latéraux 29'.

Dans ce deuxième exemple de réalisation, le support 20' forme une partie fixe d'un boîtier en deux parties, l'élément de boîtier 30' formant une partie mobile dudit boîtier. L'élément de boîtier 30' est détachable du support 20'.

Le fonctionnement de ce deuxième exemple de réalisation est le suivant.

L'utilisateur monte sur un bloc moteur de hachoir le bloc de coupe 2' avec l'écrou 7', puis met en place l'organe de montage 21' du support 20' sur l'écrou 7'. L'utilisateur peut ensuite assembler l'élément de boîtier 30' sur le support 20' et mettre en place l'accessoire de moulage de préparations hachées 40' dans le logement 53'. Les bords d'extrémité 48', 49' sont avantageusement rapprochés l'un de l'autre lors de la déformation de la charnière élastique 60' pour permettre la mise en place des nervures extérieures longitudinales 63', 64' contre les languettes élastiques 35'.

L'utilisateur introduit ensuite les aliments dans le bloc de coupe 2'. Les aliments hachés issus de la sortie d'évacuation 14' entrent dans le conduit 50', passent l'ouverture de remplissage 43' et atteignent l'accessoire de moulage de préparations hachées 40' disposé dans le logement 53'. L'utilisateur peut contrôler par la fenêtre transparente ou translucide de la paroi frontale 31' le remplissage de l'accessoire de moulage de préparations hachées 40' et arrêter le moteur du hachoir lorsque le remplissage est jugé suffisant.

Toutefois si l'utilisateur n'est pas suffisamment attentif, les aliments hachés recueillis dans l'espace de réception d'aliments hachés exercent une pression sur la paroi périphérique 41' de l'accessoire de moulage de préparations hachées 40'. Les nervures périphériques longitudinales 63', 64' repoussent les languettes élastiques 35' qui libèrent les ergots latéraux 29'. Ainsi la pression exercée par les aliments hachés est susceptible de déplacer l'organe de commande 58' coopérant avec l'organe d'accrochage 55', pour libérer l'organe de retenue 56'. L'organe de commande 58' appartient à l'accessoire de moulage de préparations hachées 40'. La pression exercée par les aliments hachés dans l'espace de réception d'aliments hachés est susceptible de libérer l'organe d'accrochage 55' de la prise avec l'organe de retenue 56', autorisant un déplacement de l'élément de boîtier 30' par rapport au support 20' libérant un espace d'expansion pour les aliments hachés, qui évite la destruction du dispositif de moulage de préparations hachées.

A titre de variante, non représentée aux figures, un autre organe d'accrochage peut venir en prise avec l'organe de retenue 56' ou avec un autre organe de retenue, après que l'organe d'accrochage 55' a été libéré de la prise avec l'organe de retenue 56', afin de retenir l'élément de boîtier 30' sur le support 20'. Par exemple, les languettes élastiques 35' pourraient former un autre organe de d'accrochage. Ainsi l'élément de boîtier 30' reste relié au support 20' après que l'organe d'accrochage 55' a cessé d'être en prise avec l'organe de retenue 56'.

A titre de variante, non représentée aux figures, l'élément de boîtier 30' peut être rigidifié pour éviter les fuites intempestives d'aliments hachés entre le support 20' et l'élément de boîtier 30' dues à une déformation de l'élément de boîtier 30'.

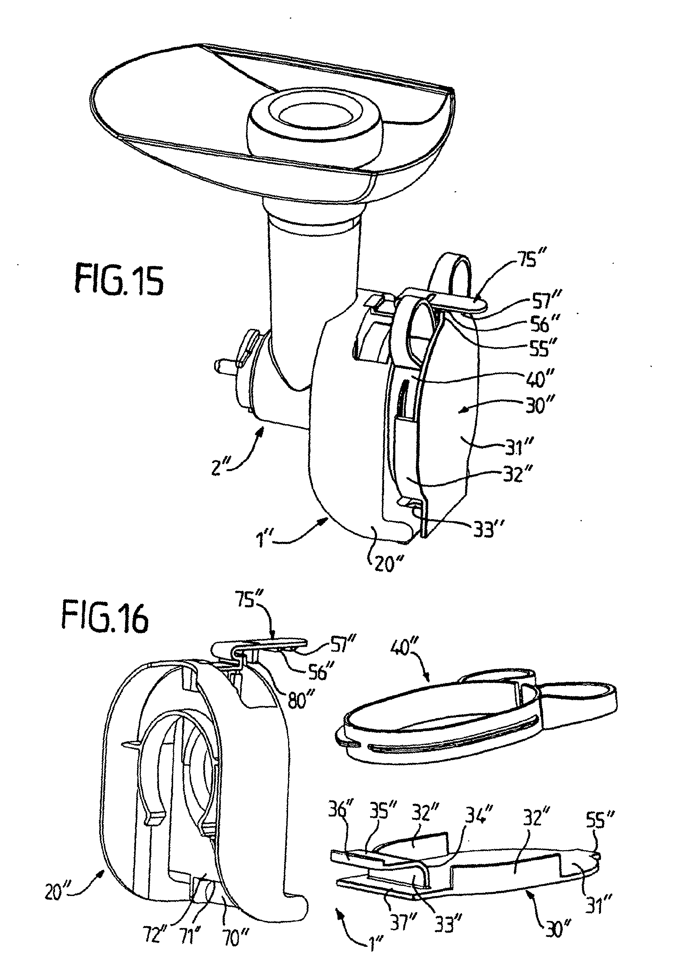

Un troisième exemple de réalisation d'un dispositif de moulage de préparations hachées 1" selon l'invention est illustré aux figures 15 à 24. Le dispositif de moulage de préparations hachées 1" est monté sur un écrou 7" d'un bloc de coupe 2". Le bloc de coupe 2" est identique aux blocs de coupe 2, 2' des exemples de réalisation précédents.

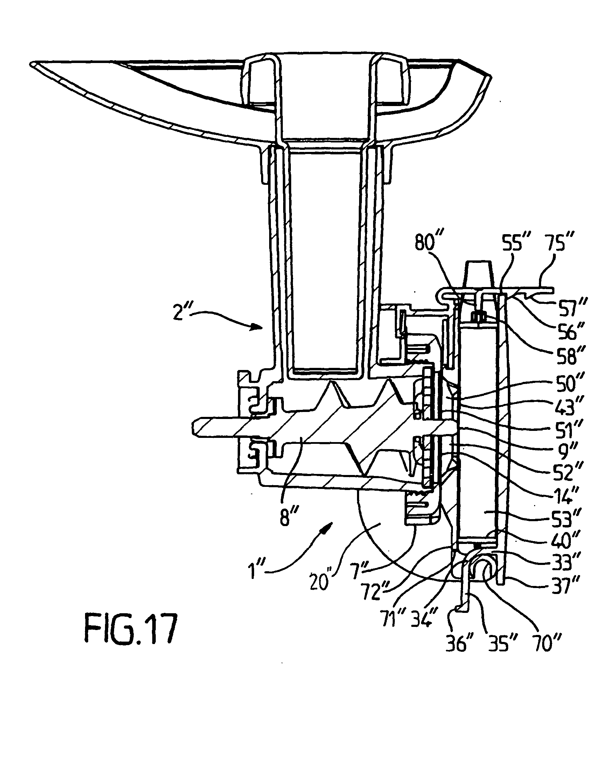

Tel que visible sur les figures 16 et 17, le dispositif de moulage de préparations hachées 1" comporte un support 20", un élément de boîtier 30" et un accessoire de moulage de préparations hachées 40". Le support 20" est prévu pour être monté sur une sortie d'évacuation 14" d'aliments hachés. Plus particulièrement, le support 20" est prévu pour être monté sur l'écrou 7". L'élément de boîtier 30" est prévu pour être relié au support 20".

Le support 20" et l'élément de boîtier 30" définissent un conduit 50" débouchant dans un logement 53" prévu pour recevoir l'accessoire de moulage de préparations hachées 40". Le conduit 50" présente une ouverture d'entrée 51" prévue pour être agencée en regard de la sortie d'évacuation 14" et une ouverture de sortie 52" débouchant dans le logement 53". L'ouverture d'entrée 51" est ménagée sur le support 20". Le logement 53" est défini par le support 20" et l'élément de boîtier 30". L'accessoire de moulage de préparations hachées 40" est monté amovible dans le logement 53". Le conduit 50" et l'accessoire de moulage de préparations hachées 40" définissent un espace de réception d'aliments hachés. D'après l'orientation usuelle du bloc de coupe 2", l'ouverture d'entrée 51" est latérale.

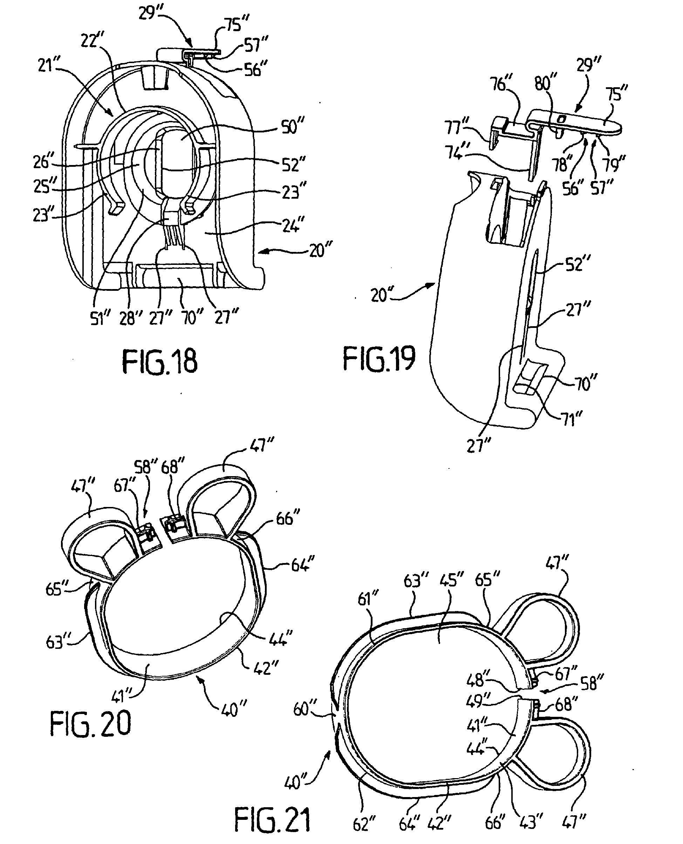

Le support 20" illustré aux figures 18 et 19 comporte un organe de montage 21" comprenant une paroi d'appui supérieure 22" prolongée de part et d'autre par deux pattes inférieures élastiques 23" recourbées vers l'intérieur. L'organe de montage 21" est prévu pour coiffer l'écrou 7". La paroi d'appui supérieure 22" est reliée à une paroi principale 24" définissant partiellement le logement 53". La paroi principale 24" présente l'ouverture d'entrée 51" ainsi que l'ouverture de sortie 52". L'ouverture d'entrée 51" est prolongée par un chanfrein 25" resserrant le conduit 50". L'ouverture de sortie 52" est précédée d'un chanfrein 26" resserrant le conduit 50". La section de l'ouverture d'entrée 51" est supérieure à la section de l'ouverture de sortie 52". Deux découpes 27" ménagées dans la paroi principale 24" ménagent une languette élastique de retenue 28" prévue pour le passage de l'axe 9" de la vis 8" du bloc de coupe 2". La languette élastique de retenue 28" est agencée à l'opposé de la paroi d'appui supérieure 22". A cet effet les faces supérieure et inférieure de la languette élastique de retenue 28" sont chanfreinées.

L'élément de boîtier 30" visible sur les figures 15 à 17 comporte une paroi frontale 31" définissant partiellement le logement 53". La paroi frontale 31" est partiellement prolongée par deux parois latérales 32" s'incurvant vers l'intérieur dans leur partie inférieure. L'élément de boîtier 30" comprend une fenêtre transparente ou translucide avantageusement formée par la paroi frontale 31 ". L'élément de boîtier 30" peut être réalisé entièrement en matériau transparent ou translucide. A titre de variante, la paroi frontale 31" peut notamment comporter une fenêtre transparente ou translucide.

L'élément de boîtier 30" est monté amovible sur le support 20". A cet effet l'élément de boîtier 30" comporte une paroi d'appui 33" issue de la paroi frontale 31" en dessous des parois latérales 32". La paroi d'appui 33" présente un arrondi 34" orienté vers le bas, prolongé par une paroi de retenue 35". La paroi de retenue 35" est complétée par un élément d'arrêt 36". Une paroi de guidage 37" prolonge la paroi frontale 31" en dessous du raccordement de la paroi d'appui 33". Le support 20" comporte un barreau 70" prévu pour recevoir la paroi d'appui 33" et la paroi de guidage 37". Le support 20" comporte une butée de retenue 71" prévue pour coopérer avec la paroi de retenue 35" et une butée d'arrêt 72" prévue pour coopérer avec l'élément d'arrêt 36".

Le support 20" comporte une pièce rapportée 29", mieux visible sur la figure 19, s'étendant partiellement au-dessus de l'ouverture de sortie 52". La pièce rapportée 29" forme une languette élastique 75" issue d'une base 76" présentant des éléments de montage 77", 74" sur le corps du support 20".

L'élément de boîtier 30" comporte un organe d'accrochage 55" prévu pour venir en prise avec un organe de retenue 56" du support 20". L'organe d'accrochage 55" est formé par l'extrémité de la paroi frontale 31" opposée à la paroi de guidage 37". L'organe de retenue 56" est formé par la languette élastique 75" du support 20" munie d'un crochet inférieur 78". L'organe d'accrochage 55" est prévu pour venir en prise avec un autre organe de retenue 57" du support 20". L'autre organe de retenue 57" est formé par la languette élastique 75" du support 20" munie d'un autre crochet inférieur 79" disposé entre le crochet inférieur 78" et l'extrémité libre de la languette élastique 75". La languette élastique 75" présente un organe d'actionnement 80" disposé entre le crochet inférieur 78" et la base 76".

L'accessoire de moulage de préparations hachées 40" illustré aux figures 20 et 21 présente une paroi périphérique 41", une face latérale 42" comportant une ouverture de remplissage 43" s'étendant jusqu'à la paroi périphérique 41", et une autre face latérale 44" définissant une ouverture de démoulage 45" s'étendant jusqu'à la paroi périphérique 41". L'ouverture de remplissage 43" s'étendant jusqu'à la paroi périphérique 41" est prévue pour être disposée en regard de l'ouverture de sortie 52" d'aliments hachés du conduit 50".

La paroi périphérique 41" définit partiellement l'espace de réception d'aliments hachés. L'accessoire de moulage de préparations hachées 40" est dépourvu de paroi de fond. La paroi périphérique 41" est fendue transversalement. La paroi périphérique 41" forme une charnière élastique médiane 60". La paroi périphérique 41" présente deux bords d'extrémité 48", 49" susceptibles d'être rapprochés et écartés l'un de l'autre, les deux bords d'extrémité 48", 49" étant écartés l'un de l'autre au repos, tel que représenté à la figure 21. La charnière élastique médiane 60" est prolongée par deux parties recourbées 61", 62" présentant chacune une nervure extérieure longitudinale 63", 64". Les nervures extérieures longitudinales 63", 64" permettent de rigidifier les parties recourbées 61", 62". L'accessoire de moulage de préparations hachées 40" est muni de moyens de préhension 47". Deux moyens de préhension 47" sont agencés aux extrémités de la paroi périphérique 41" fendue transversalement. Deux nervures extérieures d'extrémité 67", 68" s'étendent entre les moyens de préhension 47" et les bords d'extrémité 48", 49" de la paroi périphérique 41" fendue transversalement. Les nervures extérieures longitudinales 63", 64" s'interrompent avant les moyens de préhension 47", ménageant des charnières élastiques latérales 65", 66". Ainsi la paroi périphérique 41" est au moins partiellement déformable élastiquement par flexion, au niveau de la charnière élastique médiane 60" et des charnières élastiques latérales 65", 66".

L'accessoire de moulage de préparations hachées 40" présente un plan de symétrie passant par les nervures extérieures longitudinales 63", 64". Ainsi l'ouverture de remplissage 43" pourrait servir d'ouverture de démoulage, et l'ouverture de démoulage 45" pourrait servir d'ouverture de remplissage.

L'accessoire de moulage de préparations hachées 40" comporte un organe de commande 58" prévu pour coopérer avec l'organe de retenue 56". L'organe de commande 58" est formé par les nervures extérieures d'extrémité 67", 68". Ainsi l'organe de commande 58" est agencé près d'une extrémité de la paroi périphérique 41" fendue transversalement.

Les nervures extérieures d'extrémité 67", 68" sont susceptibles de venir en contact avec l'organe d'actionnement 80" lorsque l'accessoire de moulage de préparations hachées 40" est en place dans l'élément de boîtier 30". La pression exercée par les aliments hachés dans l'espace de réception d'aliments hachés est susceptible de libérer l'organe d'accrochage 55" de la prise avec l'organe de retenue 56", autorisant un déplacement de l'élément de boîtier 30" par rapport au support 20" libérant un espace d'expansion pour les aliments hachés. Plus particulièrement, la pression exercée par les aliments hachés est susceptible de déplacer l'organe de commande 58", formé par les nervures extérieures d'extrémité 67", 68". L'organe de commande 58" coopère alors avec l'organe de retenue 56" formé par la languette élastique 75" du support 20" munie du crochet inférieur 78", pour libérer l'organe d'accrochage 55" formé par l'extrémité de la paroi frontale 31" opposée à la paroi de guidage 37".

Dans ce troisième exemple de réalisation, le support 20" forme une partie fixe d'un boîtier en deux parties, l'élément de boîtier 30" formant une partie mobile dudit boîtier. L'élément de boîtier 30" est détachable du support 20".

Le fonctionnement de ce troisième exemple de réalisation est le suivant.

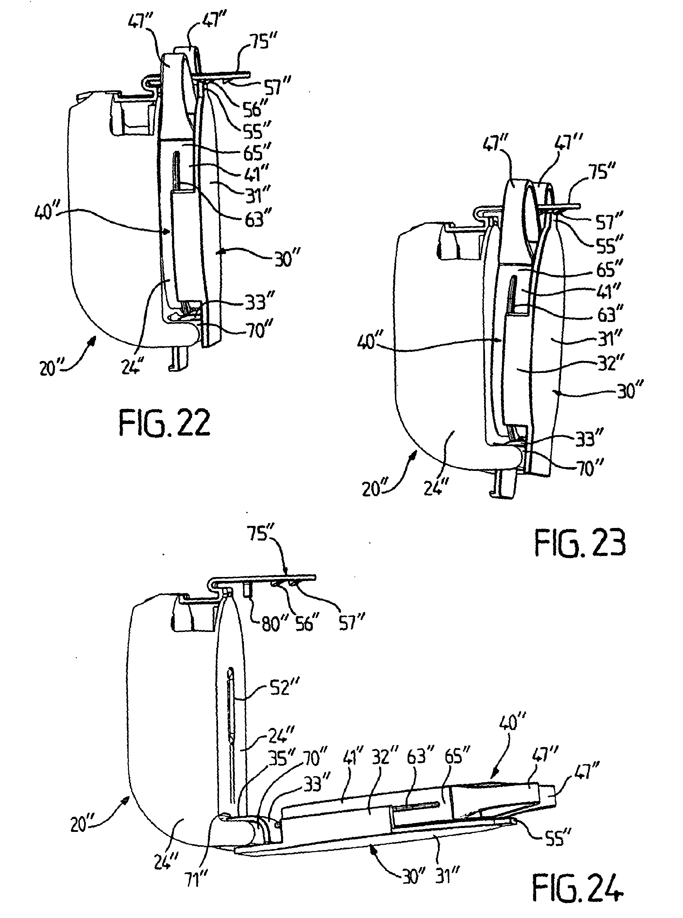

L'utilisateur monte sur un bloc moteur de hachoir le bloc de coupe 2" avec l'écrou 7", puis met en place l'organe de montage 21" du support 20" sur l'écrou 7". L'utilisateur peut ensuite assembler l'élément de boîtier 30" sur le support 20" en disposant la paroi d'appui 33" sur le barreau 70". L'utilisateur dispose alors l'accessoire de moulage de préparations hachées 40" sur la paroi frontale 31" de l'élément de boîtier 30", en utilisant par exemple les organes de préhension 47". Pour cela, l'utilisateur peut exercer une pression sur la paroi périphérique 41" pour déformer la charnière élastique médiane 60", de manière à ce que les nervures extérieures 63", 64" puissent venir en appui à l'intérieur des parois latérales 32". Le logement 53" défini par le support 20" et l'élément de boîtier 30" présente ainsi une ouverture d'introduction prévue pour la mise en place de l'accessoire de moulage de préparations hachées 40". Les bords d'extrémité 48", 49" de la paroi périphérique 41" en place dans le logement 53" sont ainsi rapprochés par rapport à leur position de repos. Si désiré, la paroi périphérique 41" peut être conçue de manière à ce que les bords d'extrémité 48", 49" soient en contact l'un avec l'autre lorsque l'accessoire de moulage de préparations hachées 40" est disposé dans le logement 53". L'utilisateur peut ensuite faire pivoter l'élément de boîtier 30 par rapport au support 20" jusqu'à ce que l'organe d'accrochage 55" vienne en prise avec l'organe de retenue 56", tel que représenté à la figure 22.

L'utilisateur introduit ensuite les aliments dans le bloc de coupe 2". Les aliments hachés issus de la sortie d'évacuation 14" entrent dans le conduit 50", passent l'ouverture de remplissage 43" et atteignent l'accessoire de moulage de préparations hachées 40" disposé dans le logement 53". L'utilisateur peut contrôler par la fenêtre transparente ou translucide de la paroi frontale 31" le remplissage de l'accessoire de moulage de préparations hachées 40" et arrêter le moteur du hachoir lorsque le remplissage est jugé suffisant.

Toutefois si l'utilisateur n'est pas suffisamment attentif, les aliments hachés recueillis dans l'espace de réception d'aliments hachés exercent une pression sur la paroi périphérique 41" de l'accessoire de moulage de préparations hachées 40". Les charnières élastiques latérales 65", 66" se déforment et permettent à l'organe de commande 58" formé par les nervures extérieures d'extrémité 67", 68" de repousser l'organe d'actionnement 80" issu de la languette élastique 75". La déformation de la languette élastique 75" écarte l'organe de retenue 56" de l'organe d'accrochage 55". La matière hachée peut alors pousser la paroi frontale 31", provoquant le pivotement de l'élément de boîtier 30" sur le support 20". L'espace d'expansion ainsi libéré pour les aliments hachés provoque une diminution de l'effort exercé sur la paroi périphérique 41". Les charnières élastiques latérales 65", 66" exercent un effort de rappel écartant l'organe de commande 58" de l'organe d'actionnement 80". La languette élastique 75" tend à reprendre sa position de repos. L'autre organe de retenue 57" vient alors en prise avec l'organe d'accrochage 55", tel que représenté à la figure 23, après que l'organe de retenue 56" a cessé d'être en prise avec l'organe d'accrochage 55". L'espace libéré entre la paroi périphérique 41" et la paroi principale 24" du support 20" permet l'expansion des aliments hachés sans risque de détériorer le dispositif de moulage de préparations hachées. L'élément de boîtier 30" reste relié au support 20" après que l'organe d'accrochage 55" a cessé d'être en prise avec l'organe de retenue 56".

Ainsi la pression exercée par les aliments hachés est susceptible de déplacer l'organe de commande 58" coopérant avec l'organe de retenue 55", pour libérer l'organe d'accrochage 55". L'organe de commande 58" appartient à l'accessoire de moulage de préparations hachées 40". La pression exercée par les aliments hachés dans l'espace de réception d'aliments hachés est susceptible de libérer l'organe d'accrochage 55" de la prise avec l'organe de retenue 56", autorisant un déplacement de l'élément de boîtier 30" par rapport au support 20" libérant un espace d'expansion pour les aliments hachés, qui évite la destruction du dispositif de moulage de préparations hachées.

L'utilisateur peut retirer l'accessoire de moulage de préparations hachées 40" de l'élément de boîtier 30" en relevant la languette élastique 75". L'autre organe de retenue 57" libère alors l'organe d'accrochage 55" et l'élément de boîtier 30" peut basculer par rapport au support 20" en pivotant sur le barreau 70" sous l'effet de la gravité, pour atteindre la position illustrée à la figure 24.

L'utilisateur peut retirer l'élément de boîtier 30" du support 20" en dégageant l'élément d'arrêt 36" de la butée d'arrêt 72", puis dégager l'accessoire de moulage de préparations hachées 40" de l'élément de boîtier 30" en rapprochant les organes de préhension 47". Lorsque l'accessoire de moulage de préparation hachées 40" a été retiré de l'élément de boîtier 30", l'élasticité de la charnière élastique 60" permet l'écartement des bords d'extrémité 48", 49" de la paroi périphérique 41" et de commencer le démoulage de la préparation hachée. Si nécessaire, l'utilisateur peut écarter encore davantage les bords d'extrémité 48", 49" à l'aide des organes de préhension 47" pour terminer le démoulage de la préparation hachée.

A titre de variante, l'autre organe de retenue 57" issu du support 20" pourrait venir en prise avec un autre organe d'accrochage issu de l'élément de boîtier 30" après que l'organe de retenue 56" a cessé d'être en prise avec l'organe d'accrochage 55".

A titre de variante, l'autre organe de retenue 57" pourrait être supprimé. L'élément de boîtier 30" resterait toutefois relié au support 20" après que l'organe d'accrochage 55" a cessé d'être en prise avec l'organe de retenue 56", du fait du pivotement de la paroi d'appui 33" sur le barreau 70" et du blocage exercé par l'élément d'arrêt 36" coopérant avec la butée d'arrêt 72".

A titre de variante complémentaire, l'élément de boîtier 30, 30', 30" n'est pas nécessairement détachable du support 20, 20', 20" mais peut être seulement mobile par rapport au support 20, 20', 20".

La présente invention n'est nullement limitée aux exemples de réalisation décrits et à leurs variantes, mais englobe de nombreuses modifications dans le cadre des revendications.

## Revendications

1. Dispositif de moulage de préparations hachées, comportant un support (20 ; 20' ; 20") prévu pour être monté sur une sortie d'évacuation (14 ; 14' ; 14") d'aliments hachés et un élément de boîtier (30 ; 30' ; 30") prévu pour être relié audit support (20 ; 20' ; 20"), ledit support (20 ; 20' ; 20") et ledit élément de boîtier (30 ; 30' ; 30") définissant un conduit (50 ; 50' ; 50") débouchant dans un logement (53 ; 53' ; 53") prévu pour recevoir un accessoire de moulage de préparations hachées (40 ; 40' ; 40"), le conduit (50 ; 50' ; 50") et l'accessoire de moulage de préparations hachées (40 ; 40' ; 40") définissant un espace de réception d'aliments hachés, **caractérisé en ce que** le support (20 ; 20' ; 20") comporte un organe de retenue (56 ; 56' ; 56") et **en ce que** l'élément de boîtier (30 ; 30' ; 30") comporte un organe d'accrochage (55 ; 55' ; 55") prévu pour venir en prise avec l'organe de retenue (56 ; 56' ; 56"), la pression exercée par les aliments hachés dans l'espace de réception d'aliments hachés étant susceptible de libérer l'organe d'accrochage (55 ; 55' ; 55") de la prise avec l'organe de retenue (56 ; 56' ; 56"), autorisant un déplacement de l'élément de boîtier (30 ; 30' ; 30") par rapport au support (20 ; 20' ; 20") libérant un espace d'expansion pour les aliments hachés.

2. Dispositif de moulage de préparations hachées selon la revendication 1, **caractérisé en ce que** l'élément de boîtier (30 ; 30' ; 30") reste relié au support (20 ; 20' ; 20") après que l'organe d'accrochage (55 ; 55' ; 55") a cessé d'être en prise avec l'organe de retenue (56 ; 56' ; 56").

3. Dispositif de moulage de préparations hachées selon la revendication 2, **caractérisé en ce qu'**un autre organe de retenue (57") issu du support (20") vient en prise avec l'organe d'accrochage (55") ou avec un autre organe d'accrochage issu de l'élément de boîtier après que l'organe de retenue (56") a cessé d'être en prise avec l'organe d'accrochage (55").

4. Dispositif de moulage de préparations hachées selon l'une la revendication 2, **caractérisé en ce que** l'organe de retenue (56) ou un autre organe de retenue issu du support vient en prise avec un autre organe d'accrochage (157) issu de l'élément de boîtier (30) après que l'organe de retenue (56) a cessé d'être en prise avec l'organe d'accrochage (155).

5. Dispositif de moulage de préparations hachées selon l'une des revendications 1 à 4, **caractérisé en ce que** la pression exercée par les aliments hachés dans l'espace de réception d'aliments hachés est susceptible de déplacer l'organe d'accrochage (55) par rapport à l'organe de retenue (56).

6. Dispositif de moulage de préparations hachées selon l'une des revendications 1 à 5, **caractérisé en ce que** la pression exercée par les aliments hachés est susceptible de déplacer un organe de commande (58') coopérant avec l'organe d'accrochage (55') pour libérer l'organe de retenue (56').

7. Dispositif de moulage de préparations hachées selon l'une des revendications 1 à 6, **caractérisé en ce que** la pression exercée par les aliments hachés est susceptible de déplacer un organe de commande (58") coopérant avec l'organe de retenue (56") pour libérer l'organe d'accrochage (55").

8. Dispositif de moulage de préparations hachées selon l'une des revendications 6 ou 7, **caractérisé en ce que** l'organe de commande (58' ; 58") appartient à l'accessoire de moulage de préparations hachées (40' ; 40").

9. Dispositif de moulage de préparations hachées selon l'une des revendications 1 à 8, **caractérisé en ce que** l'accessoire de moulage de préparations hachées (40' ; 40") présente une paroi périphérique (41' ; 41") au moins partiellement déformable élastiquement par flexion.

10. Dispositif de moulage de préparations hachées selon l'une des revendications 1 à 9, **caractérisé en ce que** la paroi périphérique (41' ; 41") est fendue transversalement.

11. Dispositif de moulage de préparations hachées selon les revendications 8 et 10, **caractérisé en ce que** l'organe de commande (58' ; 58") est agencé près d'une extrémité de la paroi périphérique (41'; 41") fendue transversalement.

12. Dispositif de moulage de préparations hachées selon l'une des revendications 1 à 11, **caractérisé en ce que** l'accessoire de moulage de préparations hachées (40' ; 40") est dépourvu de paroi de fond.

13. Dispositif de moulage de préparations hachées selon l'une des revendications 1 à 11, **caractérisé en ce que** l'accessoire de moulage de préparations hachées (40) est pourvu d'un organe de sectionnement (48), l'ouverture de remplissage (43) étant agencée entre l'organe de sectionnement (48) et une ouverture de sortie (52) du conduit (50) lorsque l'accessoire de moulage de préparations hachées (40) est agencé dans le logement (53).

14. Dispositif de moulage de préparations hachées selon l'une des revendications 1 à 13, **caractérisé en ce que** l'accessoire de moulage de préparations hachées (40 ; 40' ; 40") est muni de moyens de préhension (47 ; 47' ; 47").

15. Dispositif de moulage de préparations hachées selon l'une des revendications 10 ou 11, **caractérisé en ce que** l'accessoire de moulage de préparations hachées (40' ; 40") comporte deux moyens de préhension (47' ; 47") agencés aux extrémités de la paroi périphérique (41' ;41") fendue transversalement.

16. Dispositif de moulage de préparations hachées selon l'une des revendications 1 à 15, **caractérisé en ce que** le logement (53' ; 53") est défini par le support (20' ; 20") et l'élément de boîtier (30' ; 30").

17. Dispositif de moulage de préparations hachées selon l'une des revendications 1 à 16, **caractérisé en ce que** l'élément de boîtier (30 ; 30' ; 30") est monté amovible sur le support (20 ; 20' ; 20").

18. Dispositif de moulage de préparations hachées selon l'une des revendications 1 à 17, **caractérisé en ce que** l'accessoire de moulage de préparations hachées (40 ; 40' ; 40") est monté amovible dans le logement (53 ; 53' ; 53").

19. Dispositif de moulage de préparations hachées selon l'une des revendications 1 à 18, **caractérisé en ce que** l'élément de boîtier (30 ; 30' ; 30") présente une fenêtre transparente ou translucide.

## Claims

1. A device for molding minced preparations, the device comprising a support (20; 20'; 20") designed to be mounted on a minced food outlet (14; 14'; 14") and a housing element (30; 30'; 30") designed to be coupled to said support (20; 20'; 20"), said support (20; 20'; 20") and said housing element (30; 30'; 30") defining a duct (50; 50'; 50") opening out in a cavity (53; 53'; 53") designed to receive an accessory for molding minced preparations(40; 40'; 40"), the duct (50; 50'; 50") and the accessory for molding minced preparations (40; 40'; 40") defining a space for receiving minced food, said device being **characterized in that** the support (20; 20'; 20") is provided with a retaining member (56; 56'; 56"), and **in that** the housing element (30; 30'; 30") is provided with a catch member (55; 55'; 55") designed to come into engagement with the retaining member (56; 56'; 56"), the pressure exerted by the minced food in the space for receiving minced food being suitable for releasing the catch member (55; 55'; 55") from the engagement with the retaining member (56; 56'; 56"), thereby allowing the housing element (30; 30'; 30") to move relative to the support (20; 20'; 20"), thereby releasing an expansion space for the minced food.

2. A device for molding minced preparations according to claim 1, **characterized in that** the housing element (30; 30'; 30") remains coupled to the support (20; 20'; 20") after the catch member (55; 55'; 55") ceases to be in engagement with the retaining member (56; 56'; 56").

3. A device for molding minced preparations according to claim 2, **characterized in that** another retaining member (57") integral with the support (20") comes into engagement with the catch member (55") or with another catch member integral with the housing element after the retaining member (56") ceases to be in engagement with the catch member (55").

4. A device for molding minced preparations according to claim 2, **characterized in that** the retaining member (56) or another retaining member integral with the support comes into engagement with another catch member (157) integral with the housing element (30) after the retaining member (56) ceases to be in engagement with the catch member (155).

5. A device for molding minced preparations according to any one of claims 1 to 4, **characterized in that** the pressure exerted by the minced food in the space for receiving minced food is suitable for moving the catch member (55) relative to the retaining member (56).

6. A device for molding minced preparations according to any one of claims 1 to 5, **characterized in that** the pressure exerted by the minced food is suitable for moving a control member (58') co-operating with the catch member (55') so as to release the retaining member (56').

7. A device for molding minced preparations according to any one of claims 1 to 6, **characterized in that** the pressure exerted by the minced food is suitable for moving a control member (58") co-operating with the retaining member (56") so as to release the catch member (55").

8. A device for molding minced preparations according to claim 6 or claim 7, **characterized in that** the control member (58'; 58") belongs to the accessory for molding minced preparations(40'; 40").

9. A device for molding minced preparations according to any one of claims 1 to 8, **characterized in that** the accessory for molding minced preparations(40'; 40") has a peripheral wall (41'; 41") that is at least partially elastically deformable by bending.

10. A device for molding minced preparations according to any one of claims 1 to 9, **characterized in that** the peripheral wall (41'; 41") is split transversely.

11. A device for molding minced preparations according to claims 8 and 10, **characterized in that** the control member (58', 58") is arranged close to one end of the transversely split peripheral wall (41'; 41").

12. A device for molding minced preparations according to any one of claims 1 to 11, **characterized in that** the accessory for molding minced preparations (40'; 40") does not have any end wall.

13. A device for molding minced preparations according to any one of claims 1 to 11, **characterized in that** the accessory for molding minced preparations (40) is provided with a severing member (48), the filling opening (43) being arranged between the severing member (48) and an outlet opening (52) of the duct (50) when the accessory for molding minced preparations (40) is arranged in the cavity (53).

14. A device for molding minced preparations according to any one of claims 1 to 13, **characterized in that** the accessory for molding minced preparations (40; 40'; 40") is provided with handle means (47; 47'; 47") for taking hold of it.

15. A device for molding minced preparations according to claim 10 or claim 11, **characterized in that** the accessory for molding minced preparations (40'; 40") has two handle means (47'; 47") arranged at the ends of the transversely split peripheral wall (41'; 41").

16. A device for molding minced preparations according to any one of claims 1 to 15, **characterized in that** the cavity (53'; 53") is defined by the support (20'; 20") and by the housing element (30'; 30").

17. A device for molding minced preparations according to any one of claims 1 to 16, **characterized in that** the housing element (30; 30'; 30") is mounted removably on the support (20; 20'; 20").

18. A device for molding minced preparations according to any one of claims 1 to 17, **characterized in that** the accessory for molding minced preparations (40; 40'; 40") is mounted removably in the cavity (53; 53'; 53").

19. A device for molding minced preparations according to any one of claims 1 to 18, **characterized in that** the housing element (30; 30'; 30") is provided with a transparent or translucent window.

## Patentansprüche

1. Vorrichtung zum Formen von gehackten Zubereitungen, mit einem Träger (20 ; 20' ; 20"), der dazu vorgesehen ist, an einem Austritt (14 ; 14' ; 14") zum Ausstoßen von gehackten Lebensmitteln angebracht zu sein, und einem Gehäuseelement (30 ; 30' ; 30"), das dazu vorgesehen ist, mit dem Träger (20 ; 20'; 20") verbunden zu werden, wobei der Träger (20 ; 20' ; 20") und das Gehäuseelement (30 ; 30' ; 30") eine Leitung (50 ; 50' ; 50") definieren, die in eine Aufnahme (53 ; 53' ; 53") mündet, die dazu vorgesehen ist, ein Zubehör zum Formen von gehackten Zubereitungen (40 ; 40' ; 40") aufzunehmen, wobei die Leitung (50 ; 50' ; 50") und das Zubehör zum Formen von gehackten Zubereitungen (40 ; 40' ; 40") einen Raum zur Aufnahme von gehackten Zubereitungen definieren, **dadurch gekennzeichnet, dass** der Träger (20 ; 20' ; 20") ein Haltemittel (56 ; 56' ; 56") aufweist und das Gehäuseelement (30 ; 30' ; 30") ein Einhakmittel (55 ; 55' ; 55") aufweist, das dazu vorgesehen ist, mit dem Haltemittel (56 ; 56' ; 56") in Eingriff zu gelangen, wobei der durch die gehackten Lebensmittel im Raum zur Aufnahme von gehackten Lebensmitteln ausgeübte Druck das Einhakmittel (55 ; 55' ; 55") vom Eingriff mit dem Haltemittel (56 ; 56' ; 56") freigeben kann, wobei er eine Verlagerung des Gehäuseelements (30 ; 30' ; 30") bezüglich des Trägers (20 ; 20' ; 20") erlaubt, der einen Raum zum Ausbreiten der gehackten Lebensmittel freigibt.

2. Vorrichtung zum Formen von gehackten Zubereitungen nach Anspruch 1, **dadurch gekennzeichnet, dass** das Gehäuseelement (30 ; 30' ; 30") mit dem Träger (20 ; 20' ; 20") verbunden bleibt, nachdem das Einhakmittel (55 ; 55' ; 55") nicht mehr mit dem Haltemittel (56 ; 56' ; 56") in Eingriff steht.

3. Vorrichtung zum Formen von gehackten Zubereitungen nach Anspruch 2, **dadurch gekennzeichnet, dass** ein weiteres Haltemittel (57"), das aus dem Träger (20") hervorgeht, mit dem Einhakmittel (55") oder mit einem weiteren, aus dem Gehäuseelement hervorgehenden Einhakmittel in Eingriff gelang, nachdem das Haltemittel (56") nicht mehr mit dem Einhakmittel (55") in Eingriff steht.

4. Vorrichtung zum Formen von gehackten Zubereitungen nach Anspruch 2, **dadurch gekennzeichnet, dass** das Haltemittel (56) oder ein weiteres, aus dem Gehäuseelement (30) hervorgehende Haltemittel mit einem weiteren, aus dem Träger hervorgehenden Einhakmittel (157) in Eingriff gelangt, nachdem das Haltemittel (56) nicht mehr mit dem Einhakmittel (155) in Eingriff steht.

5. Vorrichtung zum Formen von gehackten Zubereitungen nach einem der Ansprüche 1 bis 4, **dadurch gekennzeichnet, dass** der durch die gehackten Lebensmittel im Raum zur Aufnahme der gehackten Lebensmittel ausgeübte Druck das Einhakmittel (55) bezüglich des Haltemittels (56) verlagern kann.

6. Vorrichtung zum Formen von gehackten Zubereitungen nach einem der Ansprüche 1 bis 5, **dadurch gekennzeichnet, dass** der durch die gehackten Lebensmittel ausgeübte Druck ein Steuermittel (58') verlagern kann, das mit dem Einhakmittel (55') zusammenwirkt, um das Haltemittel (56') freizugeben.

7. Vorrichtung zum Formen von gehackten Zubereitungen nach einem der Ansprüche 1 bis 6, **dadurch gekennzeichnet, dass** der durch die gehackten Lebensmittel ausgeübte Druck ein Steuermittel (58") verlagern kann, das mit dem Haltemittel (56") zusammenwirkt, um das Einhakmittel (55") freizugeben.

8. Vorrichtung zum Formen von gehackten Zubereitungen nach einem der Ansprüche 6 oder 7, **dadurch gekennzeichnet, dass** das Steuermittel (58' ; 58") zum Zubehör zum Formen von gehackten Zubereitungen (40' ; 40") gehört.

9. Vorrichtung zum Formen von gehackten Zubereitungen nach einem der Ansprüche 1 bis 8, **dadurch gekennzeichnet, dass** das Zubehör zum Formen von gehackten Zubereitungen (40' ; 40") eine umlaufende Wand (41' ; 41 ") aufweist , die durch Biegung mindestens teilweise elastisch verformbar ist.

10. Vorrichtung zum Formen von gehackten Zubereitungen nach einem der Ansprüche 1 bis 9, **dadurch gekennzeichnet, dass** die umlaufende Wand (41' ; 41 ") quer geschlitzt ist.

11. Vorrichtung zum Formen von gehackten Zubereitungen nach den Ansprüche 8 und 10, **dadurch gekennzeichnet, dass** das Steuermittel (58' ; 58") in der Nähe eines Endes der quer geschlitzten umlaufenden Wand (41' ; 41") angeordnet ist.

12. Vorrichtung zum Formen von gehackten Zubereitungen nach einem der Ansprüche 1 bis 11, **dadurch gekennzeichnet, dass** das Zubehör zum Formen von gehackten Zubereitungen (40' ; 40") keine Bodenwand aufweist.

13. Vorrichtung zum Formen von gehackten Zubereitungen nach einem der Ansprüche 1 bis 11, **dadurch gekennzeichnet, dass** das Zubehör zum Formen von gehackten Zubereitungen (40) mit einem Abtrennmittel (48) versehen ist, wobei die Einfüllöffnung (43) zwischen dem Abtrennmittel (48) und einer Austrittsöffnung (52) der Leitung (50) angeordnet ist, wenn das Zubehör zum Formen von gehackten Zubereitungen (40) in der Aufnahme (53) angeordnet ist.

14. Vorrichtung zum Formen von gehackten Zubereitungen nach einem der Ansprüche 1 bis 13, **dadurch gekennzeichnet, dass** das Zubehör zum Formen von gehackten Zubereitungen (40 ; 40' ; 40") mit Greifmitteln (47 ; 47' ; 47") versehen ist.

15. Vorrichtung zum Formen von gehackten Zubereitungen nach einem der Ansprüche 10 oder 11, **dadurch gekennzeichnet, dass** das Zubehör zum Formen von gehackten Zubereitungen (40' ; 40") zwei Greifmittel (47' ; 47") aufweist, die an den Enden der quer geschlitzten umlaufenden Wand (41' ; 41") angeordnet sind.

16. Vorrichtung zum Formen von gehackten Zubereitungen nach einem der Ansprüche 1 bis 15, **dadurch gekennzeichnet, dass** die Aufnahme (53' ; 53") durch den Träger (20' ; 20") und das Gehäuseelement (30' ; 30") definiert ist.

17. Vorrichtung zum Formen von gehackten Zubereitungen nach einem der Ansprüche 1 bis 16, **dadurch gekennzeichnet, dass** das Gehäuseelement (30 ; 30' ; 30") am Träger (20 ; 20' ; 20") abnehmbar angebracht ist.

18. Vorrichtung zum Formen von gehackten Zubereitungen nach einem der Ansprüche 1 bis 17, **dadurch gekennzeichnet, dass** das Zubehör zum Formen von gehackten Zubereitungen (40 ; 40' ; 40") in der Aufnahme (53 ; 53' ; 53") abnehmbar angebracht ist.

19. Vorrichtung zum Formen von gehackten Zubereitungen nach einem der Ansprüche 1 bis 18, **dadurch gekennzeichnet, dass** das Gehäuseelement (30 ; 30' ; 30") ein durchsichtiges oder lichtdurchlässiges Fenster aufweist.
